# EUROPEAN PATENT APPLICATION

(11) **EP 4 609 824 A1**
(43) Date of publication of application: **03.09.2025**
(21) Application number: 24711107.3
(22) Date of filing: 19.01.2024
(51) Int. Cl.: A61C 17/02, A61C 17/08, A61G 15/16, A61G 15/10

(54) **HANDPIECE ASSEMBLY AND DENTAL UNIT CHAIR HAVING SAME**

(30) Priority: 15.01.2024 KR 20240006065
(71) Applicant: Dentium Co., Ltd., Gyeonggi-do 16229 (KR)
(72) Inventor: LEE, Jun Back, Suwon-si, Gyeonggi-do 16229 (KR); CHOI, Horim, Suwon-si, Gyeonggi-do 16229 (KR); AHN, Yoo Jung, Suwon-si, Gyeonggi-do 16229 (KR); CHUNG, Sung Min, Suwon-si, Gyeonggi-do 16229 (KR)
(74) Representative: von Bülow & Tamada
(86) International application number: PCT/KR2024/001000
(87) International publication number: WO 2025/154860

(57) **Abstract**

The present invention provides a handpiece assembly, including: a handpiece; a fluid tube connected to the handpiece and formed to allow fluid to flow therein; and a swing arm formed to support the fluid tube and be bent in a bending direction as the handpiece is pulled, in which the swing arm include: a continuous member formed to extend continuously along a longitudinal direction; and a plurality of individual members coupled to the continuous member and distinct from each other, and a pair of adjacent individual members of the plurality of individual members defines a separation space to allow the bending of the continuous member along the bending direction, and a dental unit chair including the same.

## Description

### [Technical Field]

The present invention relates to a handpiece assembly and a dental unit chair including the same.

### [Background Art]

Generally, a unit chair is used to inspect a patient's oral cavity and perform treatment on teeth. The unit chair includes multi-directional driving means that may adjust a patient's posture according to a user's operation. The unit chair also has functions such as fluid provision and fluid suction.

A handpiece used by a doctor may operate by a pressure of fluid provided. For this purpose, a line providing fluid is connected to the handpiece. The handpiece and line take different postures between the mounted state and the used state. Bent arms may be used to support the handpiece and line. The arm is repeatedly bent and unfolded, and therefor, has a complex structure.

The above-described background art is technical information retained by the inventor to derive embodiments of the present invention or acquired by the inventor while deriving the present invention, and thus should not be construed as art that was publicly known prior to the filing date of the present application.

### [Disclosure]

### [Technical Problem]

The present invention provides a handpiece assembly and a dental unit chair including the same, which have a simple structure for easy assembly and disassembly.

### [Technical Solution]

According to an embodiment of the present invention, a handpiece assembly includes: a handpiece; a fluid tube connected to the handpiece and formed to allow fluid to flow therein; and a swing arm formed to support the fluid tube and be bent in a bending direction as the handpiece is pulled, in which the swing arm includes: a continuous member formed to extend continuously along a longitudinal direction; and a plurality of individual members coupled to the continuous member and distinct from each other, and a pair of adjacent individual members of the plurality of individual members defines a separation space to allow the bending of the continuous member along the bending direction.

The continuous member may include a rod, and the plurality of individual members may be coupled to the rod in a state in which the plurality of individual members are stacked.

The individual members may include: a body part to which the rod is coupled by penetrating through the body part; and a leg part located rearward in the bending direction of the body part, and the separation space may be a space between a pair of adjacent body parts of the plurality of individual members.

The rod may include: a first extension and a second extension arranged side by side with each other; and a joint connecting the first extension and the second extension.

The swing arm may further include a frame to which the continuous member is coupled, and the frame may include a hook part into which the rod is inserted in a snap-fit manner.

The continuous member may be a main plate extending along the longitudinal direction, and the individual member may include a sub-plate that protrudes along the bending direction from a side of the main plate.

The sub-plates may be provided in a pair corresponding to each other on both sides of the main plate.

According to another embodiment of the present invention, a handpiece assembly includes: a handpiece; a fluid tube connected to the handpiece and formed to allow fluid to flow therein; and a swing arm formed to support the fluid tube and be bent in a bending direction as the handpiece is pulled, in which the swing arm includes a continuous member that extends continuously along a longitudinal direction and has a cross section whose width becomes wider along the bending direction.

The continuous member may have a circular arc shape in a transverse cross section perpendicular to the longitudinal direction.

The continuous member may be arranged so that a plurality of plates extending along the longitudinal direction form an obtuse angle to each other along a cross section perpendicular to the longitudinal direction.

The swing arm may further include a frame to which the continuous member is coupled, and the frame may include a hook part into which the continuous member is inserted in a snap-fit manner.

According to still another embodiment of the present invention, a dental unit chair includes: a seat formed to support a patient; a doctor table located on one side of the seat; the handpiece assembly installed on the doctor table described above; and a body formed to provide the fluid to the fluid tube.

### [Advantageous Effects]

According to the handpiece assembly according to the present invention configured as described above and the dental unit chair including the same, since a plurality of individual members are coupled to a continuous member to form a separation space between a pair of adjacent individual members that allows bending of the continuous member along a bending direction, a swing arm supporting a fluid line connected to a handpiece may have a simple structure so that the swing arm can be easily assembled and disassembled while fully performing bending and restoration functions.

### [Brief Description of the Drawings]

FIG. 1 is a perspective view illustrating a state of use of a dental unit chair according to an embodiment of the present invention.
FIG. 2 is a perspective view illustrating a swing arm of FIG. 1.
FIG. 3 is a perspective view illustrating a continuous member and individual members of FIG. 2.
FIG. 4 is a perspective view illustrating the individual members of FIG. 3.
FIG. 5 is a perspective view of the swing arm of FIG. 2 viewed from the rear.
FIG. 6 is an exploded perspective view for describing a coupling relationship between a frame of FIG. 5 and the continuous member.
FIG. 7 is a perspective view illustrating a swing arm according to a modified example of the swing arm of FIG. 2.
FIG. 8 is a cross-sectional view illustrating a continuous member and individual members of FIG. 7.
FIG. 9 is a perspective view illustrating a swing arm according to another embodiment of the present invention.
FIG. 10 is a perspective view of the swing arm of FIG. 9 viewed from the rear.
FIG. 11 is a perspective view illustrating a swing arm according to a modified example of the swing arm of FIG. 9.

### [Best Mode]

Hereinafter, exemplary embodiments of the present invention will be described in detail with reference to the accompanying drawings.

However, the present invention is not limited to embodiments set forth herein, but may be modified variously and implemented in various different forms. However, the embodiment is provided to ensure that the disclosure of the present invention is complete and to fully inform those skilled in the art of the scope of the invention. Therefore, the present invention is not limited to the embodiments disclosed below, but it should be understood that substitution or addition of components of one embodiment and components of another embodiment include all changes, equivalents, and substitutions included in the technical spirit and scope of the present invention.

It should be understood that the accompanying drawings are provided only in order to allow exemplary embodiments of the present invention to be easily understood, and the spirit of the present invention is not limited by the accompanying drawings, but includes all the modifications, equivalents, and substitutions included in the spirit and the scope of the present invention. In the drawings, components may be expressed exaggeratedly large or small in size or thickness for convenience of understanding, etc., but the scope of protection of the present invention should not be construed as limited.

Terms used in the present specification are used only in order to describe specific implementation examples or embodiments rather than limiting the present invention. Singular forms are intended to include plural forms unless the context clearly indicates otherwise. In the specification, terms such as ~include, ~consist of, etc., are intended to designate the existence of features, numbers, steps, operations, components, parts, or a combination thereof described in the specification. Also, it should be understood that terms such as "~include" and "~consist of" do not preclude the existence or addition possibility of one or more other features or numbers, steps, operations, components, parts, or combinations thereof.

Terms including ordinal numbers such as "first," "second," etc., may be used to describe various components, but the components are not to be construed as being limited to the terms. The terms are used only to distinguish one component from another component.

It is to be understood that when one element is referred to as being "connected to/communicate with" or "coupled to" another element, it may be connected directly to or coupled directly to another element or be connected to/communicate with or coupled to another element, having the other element intervening therebetween. On the other hand, it should be understood that when one element is referred to as being "connected directly to/communicate with" or "coupled directly to" another element, it may be connected to or coupled to another element without the other element interposed therebetween.

When a component is referred to as being "on top" or "below" another component, it should be understood that not only is it disposed directly on top of other components, but there may also be other components in between.

Unless indicated otherwise, it is to be understood that all the terms used in the specification including technical and scientific terms have the same meaning as those that are generally understood by those who skilled in the art. Terms generally used and defined by a dictionary should be interpreted as having the same meanings as meanings within a context of the related art and should not be interpreted as having ideal or excessively formal meanings unless being clearly defined otherwise in the present specification.

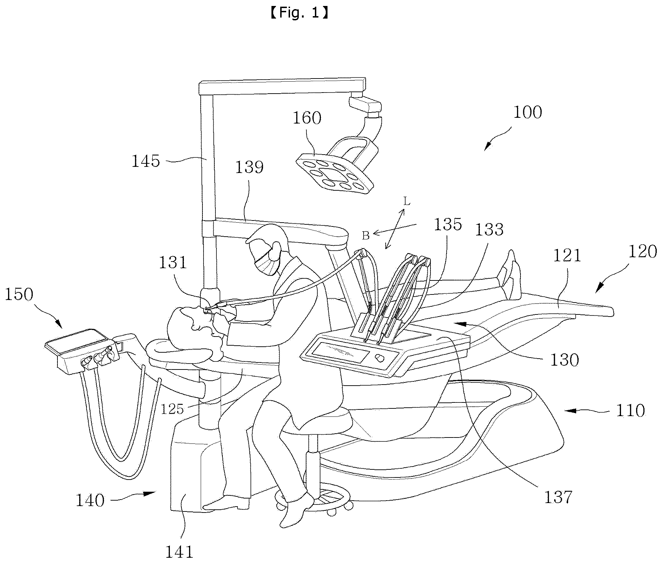

FIG. 1 is a perspective view illustrating a state of use of a dental unit chair according to an embodiment of the present invention.

Referring to this drawing, a dental unit chair 100 may include a base 110, a seat 120, a doctor table 130, a body 140, and an assist table 150.

The base 110 may be formed to be supported on a floor. A driving means (not illustrated) for adjusting a posture of the seat 120 to be described later may be built in the base 110.

The seat 120 is configured to support a patient. The seat 120 may support the patient in a sitting or lying posture. The seat 120 may have a lower body support part 121 that supports the patient's lower body and an upper body support part 125 that supports a patient's upper body.

The doctor table 130 is for holding a handpiece 131 that a doctor uses. The handpiece 131 is a tool for various processing operations on teeth, an alveolar bone, etc. The handpiece 131 may be equipped with a tool for a specific processing operation. The handpiece 131 may have a spindle motor operated by compressed fluid. The compressed fluid may be provided to the handpiece 131 through a fluid tube 133 connected to the base 110 and the body 140 to be described later. Fluid flows inside the fluid tube 133. In order to mount the handpiece 131 and the fluid tube 133, a swing arm 135 is adopted. As a doctor pulls the fluid tube 133 to use the handpiece 131, the swing arm 135 takes a bent posture along a bending direction B. When the handpiece 131 is not used, the swing arm 135 may elastically return to its original state and take an unfolded posture along the longitudinal direction L. In the above, the handpiece 131, the fluid tube 133, and the swing arm 135 may be collectively referred to as a handpiece assembly. The handpiece assembly may be mounted on a table body 137. The table body 137 may be installed to hang on a pole 145 of the body 140, which will be described later, through an angle adjustment arm 139.

The body 140 may include components for providing the compressed fluid and fluid suction force. The body 140 may serve to connect the handpiece 131, etc., to an air compressor, a suction pump, a water purifier, etc., located in a separate machine room. The body 140 may be composed of a housing 141 supported on the floor, and a pole 145 connected to the housing 141 and arranged to extend upward. The doctor table 130 is illustrated as being installed to hang on the pole 145, but otherwise, may be connected to the base 110 on an opposite side of the body 140.

The assist table 150 may be connected to the body 140. Tools used by assistant personnel, such as an inhaler or a scaler, are mounted on the assist table 150.

In addition to the above configuration, a lighting lamp 160 that generates light to illuminate a patient's oral cavity, a cuspidor (not illustrated) that catches saliva and foreign substances spit out by the patient, and the like may also be provided.

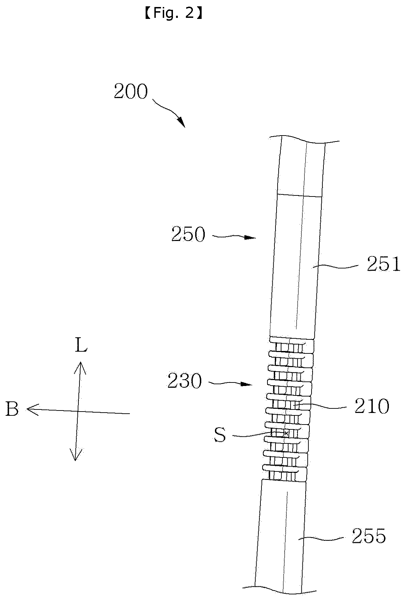

The swing arm 135 of the handpiece assembly will be described in more detail with reference to FIGS. 2 to 4. Hereinafter, for convenience of description, a new reference number 200 is assigned to the swing arm.

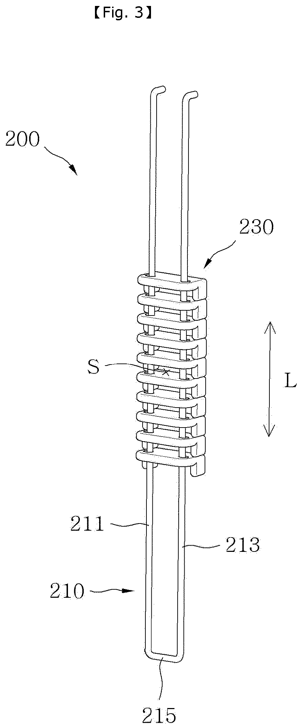

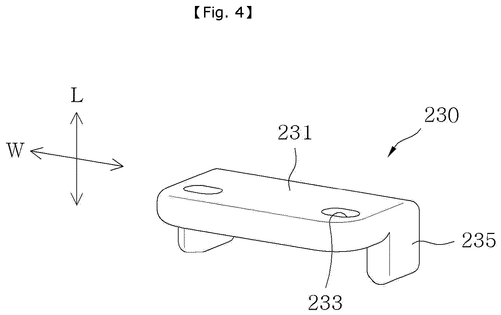

FIG. 2 is a perspective view illustrating a swing arm of FIG. 1, FIG. 3 is a perspective view illustrating a continuous member and individual members of FIG. 2, and FIG. 4 is a perspective view illustrating the individual members of FIG. 3.

Referring to these drawings, the swing arm 200 may include a continuous member 210, an individual member 230, and a frame 250.

The continuous member 210 is formed to extend continuously along a longitudinal direction L. In this embodiment, the continuous member 210 is illustrated as a rod. The rod may have, for example, a first extension 211 and a second extension 213. The first extension and second extension 211 and 213 are arranged along the longitudinal direction L and may be arranged side by side with each other. The first extension and second extension 211 and 213 may be connected to each other by a joint 215. The rod may be a single member, and may be bent multiple times. The rod may be made of a material with elastic resilience, for example, metal. The metal may include, for example, a shape memory alloy having high strength.

The individual members 230 are provided in plural numbers that are distinct from each other. The plurality of individual members 230 are coupled to the rod and may be stacked along the longitudinal direction L. The individual member 230 may have a body part 231 and a leg part 235. The body part 231 may have a plate shape, for example. A through hole 233 into which the rod is inserted may be formed in the body part 231. The leg part 235 may be formed to protrude from the bottom of the body part 231 along the longitudinal direction L. The leg part 235 may be provided in a pair disposed at both ends of the body part 231 along a width direction W perpendicular to the longitudinal direction L. To allow bending between a pair of adjacent individual members 230, the leg part 235 may be located at a rear side of the body part 231 along the bending direction B. The individual members 230 may be made of the same metal as the continuous member 210, or otherwise, may be manufactured by resin injection molding.

The pair of adjacent individual members 230 defines a separation space S to allow the rod to be bent along the bending direction B. The separation space S may be the space between the pair of adjacent body parts 231. When the rod is bent, the pair of adjacent body parts 231 may become closer to each other. On the other hand, a pair of adjacent leg parts 235 may be spaced apart from each other.

The frame 250 may have, for example, an upper part 251 and a lower part 255. The continuous member 210 may be coupled to the upper part 251 and the lower part 255. The plurality of individual members 230 may be arranged between the upper part 251 and the lower part 255. The upper part 251 may also be equipped with a roll to prevent a flow path of the fluid tube 133 (see FIG. 1) from being blocked while the fluid tube 133 is bent. The lower part 255 may be detachably coupled to the table body 137 (see FIG. 1).

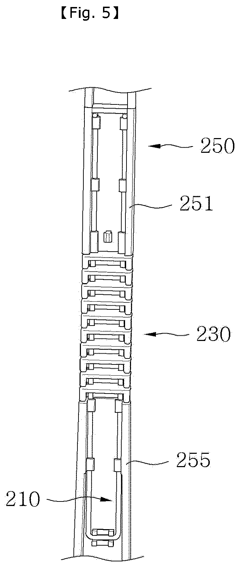

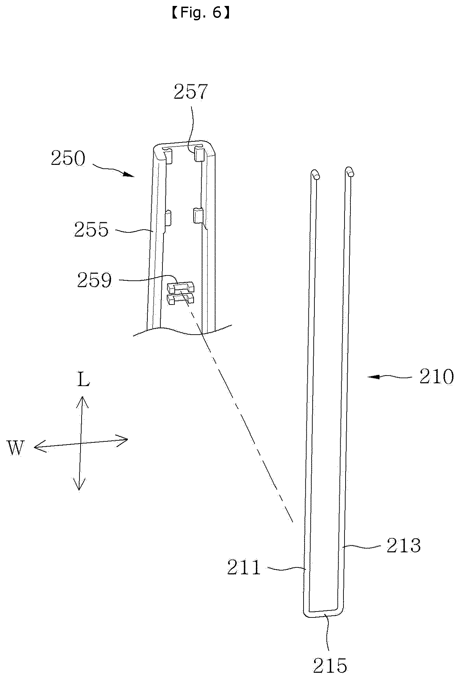

The coupling structure between the frame 250 and the continuous member 210 will be described with reference to FIGS. 5 and 6. FIG. 5 is a perspective view of the swing arm of FIG. 2 viewed from the rear, and FIG. 6 is an exploded perspective view for describing a coupling relationship between a frame of FIG. 5 and the continuous member.

Referring to these drawings, the rod may be coupled to a rear surface of the frame 250. Specifically, a hook part 257 may be formed on the rear surface. The hook part 257 is again restored to its original state after being opened as the first extension 211 or the second extension 213 is pushed along the width direction W. The restored hook part 257 clamps the first extension 211 or the second extension 213. As a result, the rod may be simply fastened to the hook part 257 in a snap-fit manner.

The joint 215 may be fitted into a receiving part 259. The receiving part 259 may be composed of two protrusions parallel to each other. The joint 215 may be sandwiched between the two protrusions and supported on the lower protrusion of the protrusions.

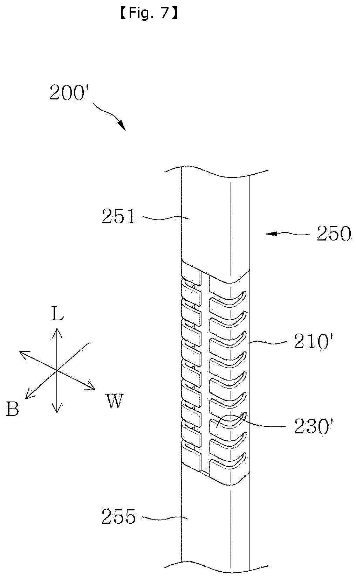

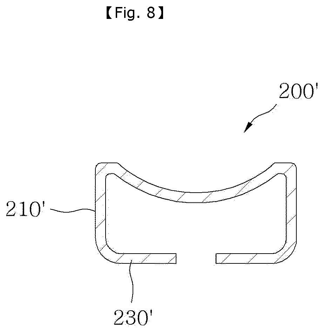

FIG. 7 is a perspective view illustrating a swing arm according to a modified example of the swing arm of FIG. 2, and FIG. 8 is a cross-sectional view illustrating a continuous member and individual members of FIG. 7.

Referring to these drawings, similar to the above embodiment, a swing arm 200' may include a continuous member 210', an individual member 230', and a frame 250.

The continuous member 210' may be one plate (main plate) extending along the longitudinal direction L. The main plate may have a cross section that is generally a circular arc shape. The individual member 230' may be a small plate (sub-plate) that protrudes along the bending direction B from a side of the main plate.

The sub-plates may be arranged in pairs on both sides of the main plate. The sub-plate may be bent to extend further along the width direction W. A pair of adjacent sub-plates is distinct (spaced apart) from each other, but the adjacent sub-plates are all connected to the main plate.

The main plate and the sub-plate may be a single member. For example, the main plate and the sub-plate may be injection molded from a resin. In that case, the process of assembling the main plate and the sub-plate is not required.

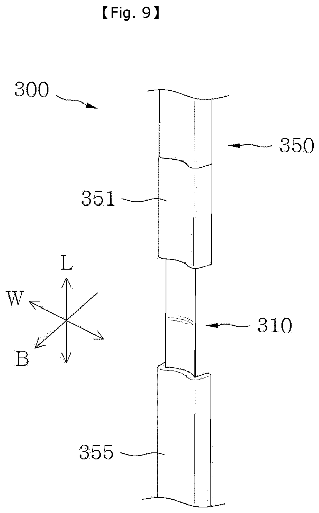

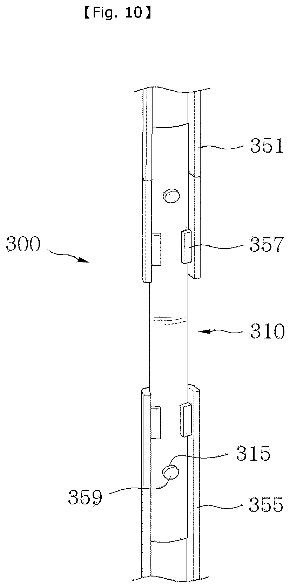

FIG. 9 is a perspective view illustrating a swing arm according to another embodiment of the present invention, and FIG. 10 is a perspective view of the swing arm of FIG. 9 viewed from the rear.

Referring to these drawings, unlike the previous embodiment, a swing arm 300 has a continuous member 310 and a frame 350 without the individual member 230 (see FIG. 3).

The continuous member 310 extends continuously along the longitudinal direction L. The continuous member 310 may be a generally elongated plate. The continuous member 310 is a material with elastic resilience and may be made of, for example, metal.

The continuous member 310 may be a single member whose transverse cross section has a generally circular arc shape. The transverse cross section is along a plane perpendicular to the longitudinal direction L. The continuous member 310 may also be arranged so that the width of the cross section becomes wider along the bending direction B.

The continuous member 310 may be fitted into and coupled to the hook part 357 formed on the upper part 351 and the lower part 355 of the frame 350. A protrusion 359 may be formed on at least one of the upper part 351 and the lower part 355, and a receiving hole 315 that accommodates the protrusion 359 may be formed in the continuous member 310. With this coupling structure, the continuous member 310 may be easily coupled/separated to/from the frame 350, and the coupled state may be firmly maintained.

The continuous member 310 is elastically bent, so the swing arm 300 is bent in the bending direction B, and when restored to its original state, the swing arm 300 may firmly maintain a correctly unfolded posture along the longitudinal direction L.

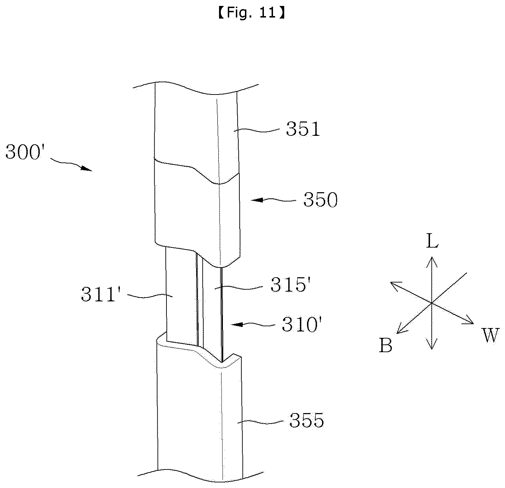

FIG. 11 is a perspective view illustrating a swing arm according to a modified example of the swing arm of FIG. 9.

Referring to this drawing, a swing arm 300' is generally the same as the swing arm 300 according to the above embodiment, but there is a difference in that the continuous member 310' is composed of a plurality of plates 311' and 315'.

The plurality of plates 311' and 315' may be arranged to form an obtuse angle to each other along a transverse cross section perpendicular to the longitudinal direction L. Thereby, the plurality of plates 311' and 315' may implement substantially the same function as the continuous member 310, which is the single member of the above embodiment.

### [Industrial Applicability]

The present invention has industrial applicability in the manufacturing field of a dental unit chair.

## Claims

1. A handpiece assembly, comprising:
a handpiece;
a fluid tube connected to the handpiece and formed to allow fluid to flow therein; and
a swing arm formed to support the fluid tube and be bent in a bending direction as the handpiece is pulled,
wherein the swing arm includes:
a continuous member formed to extend continuously along a longitudinal direction; and
a plurality of individual members coupled to the continuous member and distinct from each other, and
a pair of adjacent individual members of the plurality of individual members defines a separation space to allow the bending of the continuous member along the bending direction.

2. The handpiece assembly of claim 1, wherein the continuous member includes a rod, and
the plurality of individual members are coupled to the rod in a state in which the plurality of individual members are stacked.

3. The handpiece assembly of claim 2, wherein the individual members includes:
a body part to which the rod is coupled by penetrating through the body part; and
a leg part located at a rear side in the bending direction of the body part, and
the separation space is a space between a pair of adjacent body parts of the plurality of individual members.

4. The handpiece assembly of claim 2, wherein the rod includes:
a first extension and a second extension arranged side by side with each other; and
a joint connecting the first extension and the second extension.

5. The handpiece assembly of claim 2, wherein the swing arm further includes a frame to which the continuous member is coupled, and
the frame includes a hook part into which the rod is inserted in a snap-fit manner.

6. The handpiece assembly of claim 1, wherein the continuous member is a main plate extending along the longitudinal direction, and
the individual member includes a sub-plate that protrudes along the bending direction from a side of the main plate.

7. The handpiece assembly of claim 6, wherein the sub-plates are provided in a pair corresponding to each other on both sides of the main plate.

8. A handpiece assembly, comprising:
a handpiece;
a fluid tube connected to the handpiece and formed to allow fluid to flow therein; and
a swing arm formed to support the fluid tube and be bent in a bending direction as the handpiece is pulled,
wherein the swing arm includes a continuous member that extends continuously along a longitudinal direction and has a cross section whose width becomes wider along the bending direction.

9. The handpiece assembly of claim 8, wherein the continuous member has a circular arc shape in a transverse cross section perpendicular to the longitudinal direction.

10. The handpiece assembly of claim 8, wherein the continuous member is arranged such that a plurality of plates extending along the longitudinal direction form an obtuse angle to each other along a cross section perpendicular to the longitudinal direction.

11. The handpiece assembly of claim 8, wherein the swing arm further includes a frame to which the continuous member is coupled, and
the frame includes a hook part into which the continuous member is inserted in a snap-fit manner.

12. A dental unit chair, comprising:
a seat formed to support a patient;
a doctor table located on one side of the seat;
the handpiece assembly installed on the doctor table and according to claim 1 or 8; and
a body formed to provide the fluid to the fluid tube.
